# EUROPEAN PATENT SPECIFICATION

(11) **EP 0 572 958 B1**
(45) Date of publication and mention of the grant of the patent: **02.04.1997**
(21) Application number: 93108714.2
(22) Date of filing: 28.05.1993
(51) Int. Cl.: B65G 49/04

(54) **Machine for multiple finishing operations of metal pieces**
Vorrichtung zur mehrfachen Endbearbeitung von Werkstücken aus Metall
Appareil pour le finissage multiple de pièces métalliques

(30) Priority: 01.06.1992 IT VA920015
(43) Date of publication of application: 08.12.1993
(73) Proprietor: RENI-CIRILLO S.r.l., I-20061 Carugate MI (IT)
(72) Inventor: Reni, Mario, c/o Reni-Cirillo S.r.l., I-20061 Carugate (MI) (IT)

(56) References cited:
- DE-C- 572 986
- FR-A- 1 555 108
- FR-A- 2 286 771
- GB-A- 936 984
- US-A- 3 855 107

## Description

This invention relates to a machine for multiple finishing operations of metal pieces.

In the mechanical industry, and particularly in that part which is concerned with the production of mechanical small pieces. the problem of cleaning, degreasing, pickling, phosphatizing, protective coating and other similar processes constantly presents itself after the forming process of the pieces.

These finishing operations are generally effected by using either immersion, or screw-type or spraying machines and are always completed with a washing and drying cycle of the finished pieces.

The products used for the various finishing operations are generally in liquid form, preferably water solutions so that, in the last rinsing cycle after the last treatment performed, a dewatering agent is added to the water to make it flow more easily on the wet surface of the pieces.

After rinsing, pieces are conveyed to a drying machine for the drying cycle before being packed for dispatch or being submitted to subsequent terminal processes such as punching, for instance.

The Applicant has already described some machines for the drying of small metal pieces: such as e.g. by using absorbing material and hot air in Italian Patent Application No. 19729 A/87 (EP-A-282 937) or by using hot air in European Patent Application No. 353601.

As mentioned above, in the course of the finishing operations, many different treatments are carried out by using liquid products and in any case it would be very useful to use a single machine to perform the entire sequence of treatments without the need for pieces to he transferred from one machine to another, and without the need for intermediate dripping or rinsing cycles to be carried out in order to eliminate the excess of liquid used for the treatment.

One of the fundamental features of the machine according to the present invention is represented by the fact that this machine allows multiple finishing operations including the final drying cycle of the finished pieces, to be carried out at the same time and without using several machines.

The machine for multiple finishing operations according to the present invention is fully described in claim 1. It essentially consists of: - two or more couples of parallel metal disks fixed to a common support which keeps them in a vertical position at a pre-fixed distance
- a third disk parallel to the others is fitted within the space delimited by each couple of disks, said third disk being free to rotate
- two metal cylinders forming a circular rim being fixed at square angle to the surface of said disk
- said rim having a thickness essentially equal to the distance between the two fixed disks and being divided into sectors by means of partitions
- said partitions having an inclination of 10ö30 ° in respect of the radius connecting their most external point to the center of the disk.

The sector of said circular rim are thus delimited transversally by the surface of the fixed disk of each couple which is closer to the loading device and by the surface of the mobile disk which acts as support for the circular rim itself; radially, by the inclined partitions; and, at the top and at the bottom, by two perforated grates which allow liquids and air to pass through.

The distance between the two cylinders delimiting the circular rim is typically comprised between one third and two thirds of the radius of the disks of the machine.

The couples of fixed disks are parallel one in respect of the others and the distance between each couple is equal to that existing between the two disks of a couple; in this space a device being fitted in form of a paralleliped with trapezoidal section, mobile vertically, inclined from 30° to 60° in respect of the vertical, with the minor base of the trapezium towards the lower side and having a volume corresponding to the volume of one of the sectors of the circular rim.

The lowest sector of each circular rim is plunged into a tank containing the solution for the treatment which is carried out in correspondence with each circular rim. The liquid dragged by the pieces contained into the sector of the circular rotating rim is drained from that very sector at the exit from the tank and is recovered into the tank situated below each rim, by flowing along the walls of the couple of disks delimiting the rim itself.

The last circular rotating rim, which is destined to the final rinsing and drying of the pieces is connected with a heating system allowing the pieces contained into the corresponding sector to be dried.

Each disk is provided with a square or rectangular-shaped opening having the lower side as long as the minor base of the above-mentioned trapezium-shaped device, which is mobile vertically and is fitted between two parallel couples of fixed disks.

Considering the succession of the disks from the loading to the unloading point, the opening of the disk of each couple which is closer to the feeding side is in a lower position in respect of the opening of the disk which is the farthest from the feeding side, so as to allow the loading and unloading operations of each rim at the same time, by using the trapezoidal section devices existing between the couples of disks, which connect the exit opening of a rotating circular rim to the entry opening of the successive rotating rim, the first and the last trapezoidal section devices acting as loader and unloader of the machine.

The supporting disks of the circular rims rotating around a single central axis, are endowed with intermittent motion, with a displacement equal to a section of rotating circular rim and a step-by-step cadence equal to a time interval comprised between 5 seconds and 5 minutes , this period being variable according to the type and quantity of the pieces loaded into each sector of the machine.

The number of sectors of every rotating circular rim is typically comprised between 6 and 32.

According to one of the fundamental features of the present invention the machine can carry out several finishing operations while assuring the passage of the pieces from a finishing operation to the other in a fully automatic mode.

The movement of the rotating circular rim, combined with the inclination in respect of the radius of the disks of the partitions delimiting the sectors, causes the pieces contained in said sectors, to be moved continuously assuring the draining of the liquid also in case this is present in the turned upwards cavities of the pieces.

The last rotating circular rim of the machine is used for the final rinsing, the possible treatment of the pieces with protective agents including the possible painting of the same and the final drying by using hot air.

The hot air which is blown above the pieces and then suctioned below them through the grate delimiting the sector of the rotating circular rim which represents the bottom wall of each sector, creates a slight depression into the cavities, holes and grooves of the pieces. Such depression helps the evaporation of even the smallest residual drops of the washing liquid.

In case said liquid does not consits of water but of a compound which cannot be dispersed in the atmosphere , the suctioning of the air coming from the drying of the pieces through the above mentioned duct allows said air to be easily conveyed towards waste or recovery systems of the evaporated liquid.

The vertical movement of the loading and unloading trapezoidal section devices, allows pieces to be moved softly without knocking or falling against each other which might damage their surface and compromise the finish obtained with the previous treatments.

The volume of said loading and unloading devices (equal to that of a sector of the rotating circular rim) offers also the advantage of the accurate loading of the pieces (particularly in case of small size items) into each sector of the rotating circular rim, thus optimizing the perfomance of the machine.

A typical embodiment of a machine according to the present invention having three couples of fixed disks and three mobile disks supporting three rotating circular rims, will now be described by referring to the attached drawings in which:

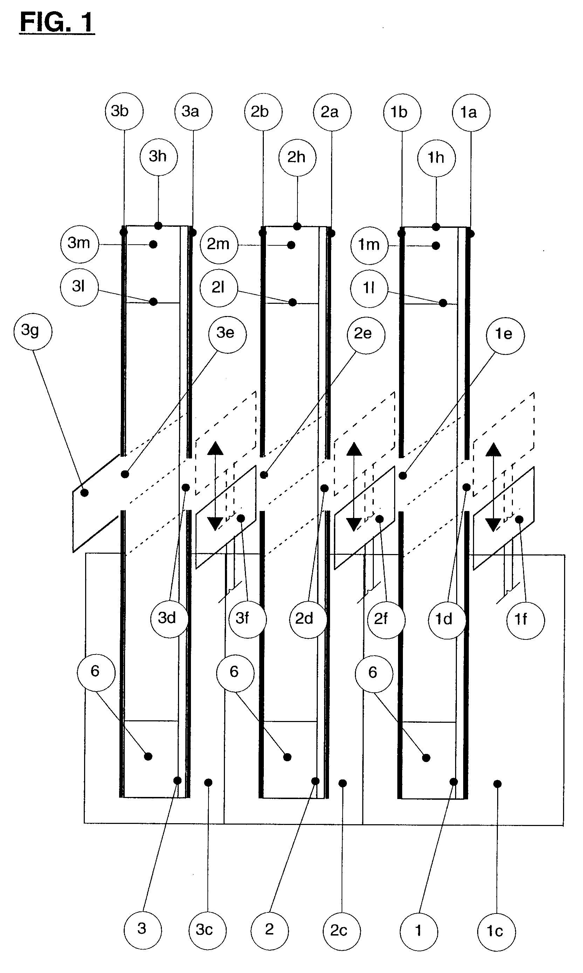

- figure 1 shows a schematic vertical section of the machine (lateral view)

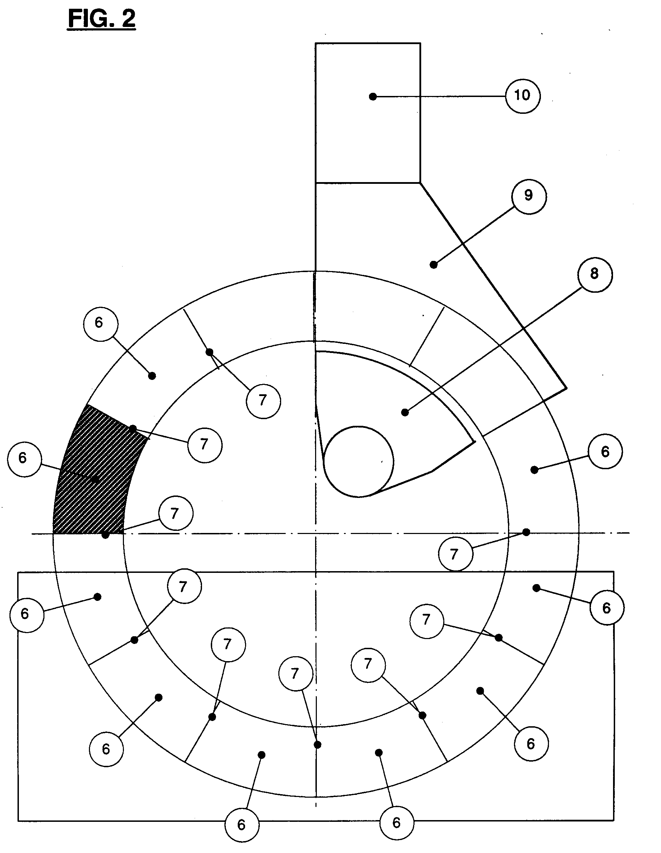

- figure 2 shows a schematic vertical section of the machine (front view)

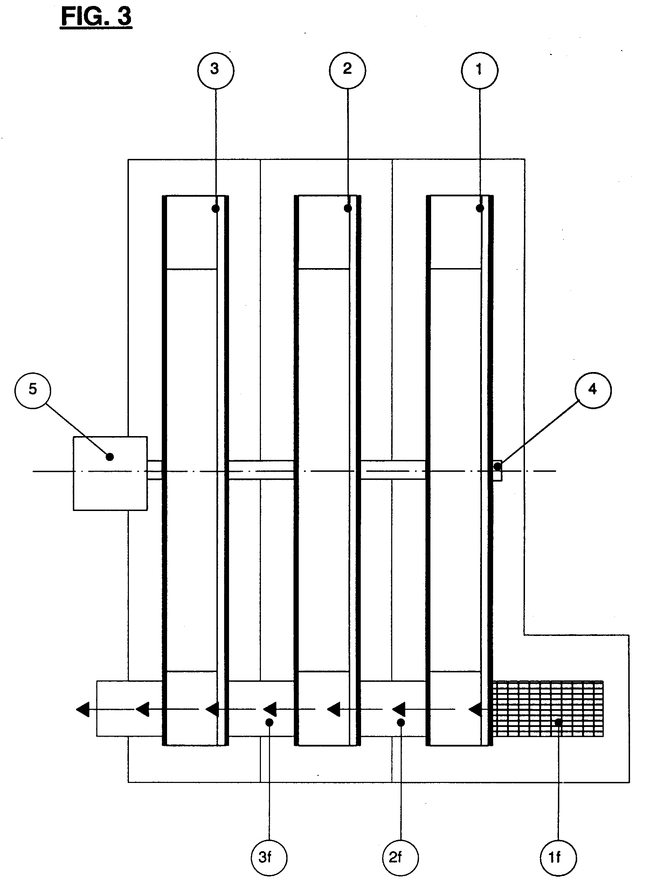

- figure 3 shows a schematic plan section of the machine (plan view)

Three couples of parallel metal disks (1a, 1b; 2a, 2b; 3a; 3b) are fixed to a common support (4). Two metal cylinders (1h, 1l; 2h; 2l: 3h, 3l) are fixed at the surface of three moving disks (1m, 2m, 3m), each one being fitted between the parallel metal disks (1a, 1b; 2a, 2b; 3a, 3b), said cylinders forming three circular rims (1, 2, 3), which are divided in sectors (6) by means of partitions (7).

The three rotating circular rims (1), (2) and (3) rotate around the same horizontal axis (4) and are driven by a motor (not shown in the figure) by means of a ratiomotor (5) allowing running and stopping to be adjusted according to requirements

During the treatment cycle, the internal part of each rotating circular rim happens to be in correspondence with a section (8) of the fixed disk which is connected with a suction fan (not shown in the figure) which allows any water or product residuals which happen to adhere on the pieces after the dripping phase, to be evaporated.

A duct (9) is placed above the last rotating circular rim (3) of the machine, through which hot air is blown into the machine, said air being previously heated by a battery of heating elements (10) and then suctioned through section (8) of the fixed disk which is connected with the suction fan.

The feeding of hot air from above and its edit through section (8) assures the perfect drying of the pieces.

The lower sectors of the three rotating circular rims (1), (2) and (3) of the machine are plunged in tanks (1c), (2c) and (3c) each containing a different solution. According to the embodiment shown in the attached drawings, three trapezoidal section devices endowed with vertical and simultaneous motion (1f), (2f) and (3f), with an inclination angle of 30° in respect of the vertical and having the same volume as a sector (6) of the rotating circular rim, assure the batching of the pieces to be loaded into the machine as well as their loading and unloading without making them knocking against each other, which might damage their surfaces. When the three trapezoidal section devices (1f), (2f) and (3f) come to be situated in the lowest position, device (1f) receives the pieces to be loaded into the machine for the treatments, while devices (2f) and (3f) come to be situated in correspondence with the openings (1e) and (2e) of the fixed disks and thus receive the pieces contained in the sector (6) of the circular rims (1) and (2) which have undergone the treatment in each rotating circular rim; at the same time fixed device (3g) unloads the pieces from sector (6) of the circular rotating rim (3) through opening (3e) of the last fixed disk, outside the machine.

On the contrary, when the trapezoidal section devices (1f), (2f) and (3f) come to be situated in the highest position, they will load the pieces into sectors (6) of the respective rotating circular rims (1), (2) and (3) through openings (1d), (2d) and (3d) existing in the respective fixed disks.

The three rotating circular rims (1), (2) and (3) rotate with a step-by-step cadence, each forward step corresponding to a sector (6) followed by a stop interval during which the trapezoidal section loading/unloading device (1f) is filled with the pieces to be treated while loading and unloading devices (2f) and (3f) receive the content of the respective sectors (6) of the rotating circular rims (1) and (2) as explained above. Having concluded this phase, the three devices (1f), (2f) and (3f) move upward and transfer their content into the following sector (6) which has been previously emptied during the stop of the movement of the rotating circular rims and which has made a step forward, said step corresponding to a sector (6) of the rotating circular rim. Having concluded the transfer of the pieces, the rotating circular rims are started again and rotate a step forward, said step corresponding to a sector, so that the described cycle is repeated.

## Claims

1. Machine for multiple finishing operations of metal pieces, consisting of:
- two or more couples of parallel vertical metal disks (1a, 1b; 2a, 2b; 3a, 3b) fixed to a common support (4);
- a third disk (1m, 2m, 3m) parallel to the others fitted within the space delimited by each couple of disks (1a, 1b; 2a, 2b; 3a, 3b), said third disk being free to rotate;
- a circular rim (1, 2, 3) fixed to said third supporting disk and divided into axially open sectors (6) by means of partitions (7);
- a transfer device (2f, 3f) mobile vertically fitted between the two couples of disks (1b, 2a; 2b, 3a) delimiting two contiguous circular rims;
- a loading device (1f) mobile vertically and simultaneously with said transfer device (2f, 3f) and a fixed unloading device (3g); all said transfer (2f, 3f) loading (1f) and unloading (3g) devices having an inclination angle of 30° to 60° in respect of the vertical; each fixed disk being provided with an opening disposed in front of the rim, adapted to the shape and size of each sector and located approximately at the level of the axle of the disks; and
- treatment means to perform said finishing operations inside said sectors.

2. Machine for multiple finishing operations of metal pieces as claimed in claim 1, characterised by the fact that said transfer (2f, 3f) and loading (1f) devices mobile vertically and simultameously are paralleliped with trapezoidal section, inclined from 30° to 60° in respect of the vertical, with the minor base of the trapezium towards the lower side and having a volume corresponding to the volume of one of the axially open sectors (6) of the circular rim (1, 2, 3).

3. Machine for multiple finishing operations of metal pieces as claimed in claim 1, characterised by the fact that the lowest axially open sector (6) of each circular rim (1, 2, 3) passes through a tank (1c, 2c, 3c) containing the liquid which constitutes said treatment means and is used for the treatment which is carried out in correspondence with each circular rim (1, 2, 3).

4. Machine for multiple finishing operations of metal pieces as claimed in claim 1, characterised by the fact that the last circular rotating rim (3) of the machine is connected through a duct (9) with a heating system (10) allowing the pieces contained into the corresponding axially open sector (6) to be dried.

5. Machine for multiple finishing operations of metal pieces as claimed in claim 2, characterised by the fact that each parallel vertical metal disk of the couple (1a, 1b; 2a, 2b; 3a, 3b) is provided with a square or rectangular-shaped opening having the lower side as long as the minor base of said trapezoidal section devices (1f, 2f, 3f).

6. Machine for multiple finishing operations of metal pieces as claimed in claim 5, characterised by the fact that the opening of the disk (1d, 2d, 3d) of each couple which is closer to the feeding is in a lower position in respect of the opening of the disk (1e, 2e, 3e) which is the farthest from the feeding, so as to allow the loading and unloading operations of each rim (1, 2, 3) at the same time, by using the trapezoidal section devices (1f, 2f, 3f).

7. Machine for multiple finishing operations of metal pieces as claimed in claim 1, characterised by the fact that the supporting disks (1m, 2m, 3m) of the circular rims (1, 2, 3) rotating around the single central axis, are endowed with intermittent motion, with a displacement equal to a section (6) of rotating circular rim and a step-by-step cadence equal to a time interval comprised between 5 seconds and 5 minutes.

8. Machine for multiple finishing operations of metal pieces as claimed in claim 1, characterised by the fact that the number of the axially open sectors (6) of each circular rim (1, 2, 3) of the machine is comprised between 6 and 32.

## Patentansprüche

1. Vorrichtung für die Mehrfach-Endbearbeitung metallischer Teile, umfassend:
- zwei oder mehr Paare paralleler, vertikaler, metallischer Scheiben (1a, 1b; 2a, 2b; 3a, 3b), die an einem gemeinsamen Tragorgan befestigt sind;
- eine dritte, frei drehbare Scheibe (1m, 2m, 3m), die parallel zu den anderen Scheiben angeordnet und in den Raum eingesetzt ist, der von jedem Scheibenpaar (1a, 1b; 2a, 2b; 3a, 3b) begrenzt wird;
- eine kreisförmige Felge (1, 2, 3), die an der dritten, tragenden Scheibe befestigt und durch Trennwände (7) in axial offene Sektoren (6) unterteilt ist;
- eine vertikal bewegliche Übergabeeinrichtung (2f, 3f), die zwischen den beiden Scheibenpaaren (1b, 2a; 2b, 3a) eingesetzt ist, welche zwei aufeinander folgende Felgen begrenzen;
- eine Beladeorgan (1f), das gleichzeitig mit der Übergabeeinrichtung (2f, 3f) vertikal beweglich ist, sowie ein festes Entladeorgan (3g), wobei die Übergabeeinrichtung (2f, 3f), das Beladeorgan (1f) und das Entladeorgan (3g) eine bezüglich der Vertikalen geneigte Stellung mit einem Winkel Zwischen 30° und 60° haben und wobei jede feste Scheibe eine gegenüber der Felge liegende Öffnung hat, die an die Form und Größe jedes Sektors angepaßt ist und ungefähr in Höhe der Achse der Scheiben liegt; sowie
- Behandlungseinrichtungen zur Ausführung der Endbearbeitungsoperationen innerhalb der Sektoren.

2. Vorrichtung für die Mehrfach-Endbearbeitung metallischer Teile nach Anspruch 1, dadurch gekennzeichnet, daß die Übergabeeinrichtung (2f, 3f) und das Beladeorgan (1f), die gleichzeitig vertikal beweglich und gegenüber der Vertikalen zwischen 30° und 60° geneigt sind, Parallelepipedform haben, wobei die kleinere Trapezbasis nach unten weist und das Volumen dem Volumen jeweils eines axial offenen Sektors (6) der kreisförmigen Felge (1, 2, 3) entspricht.

3. Vorrichtung für die Mehrfach-Endbearbeitung metallischer Teile nach Anspruch 1, dadurch gekennzeichnet, daß der unterste, axial offene Sektor (6) jeder kreisförmigen Felge (1, 2, 3) durch einen Behälter (1c, 2c, 3c) läuft, der Flüssigkeit enthält und die Behandlungseinrichtung bildet und zur Bearbeitung eingesetzt wird, die im Bereich jeder Felge (1, 2, 3) durchgeführt wird.

4. Vorrichtung für die Mehrfach-Endbearbeitung metallischer Teile nach Anspruch 1, dadurch gekennzeichnet, daß die letzte rotierende Felge (3) der Vorrichtung über eine Leitung (9) mit einem Heizsystem (10) verbunden ist, über welches die Teile getrocknet werden, die sich in dem jeweiligen axial offenen Sektor (6) befinden.

5. Vorrichtung für die Mehrfach-Endbearbeitung metallischer Teile nach Anspruch 2, dadurch gekennzeichnet, daß jede der parallelen, vertikalen, metallischen Scheiben eines Paares (1a, 1b; 2a, 2b; 3a, 3b) eine quadratische oder rechteckige Öffnung aufweist, deren untere Seite genauso lang ist wie die kleinere Basis der trapezförmigen Transporteinrichtungen (1f, 2f, 3f).

6. Vorrichtung für die Mehrfach-Endbearbeitung metallischer Teile nach Anspruch 5, dadurch gekennzeichnet, daß die Öffnung in der Scheibe (1d, 2d, 3d) jedes Paares, die näher an der Beladeseite liegt, tiefer als die Öffnung in der von der Beladeseite am weitesten entfernten Scheibe ist, so daß das Beladen und das Entladen jeder Felge (1, 2, 3) unter Verwendung der trapezförmigen Transporteinrichtungen (1f, 2f, 3f) gleichzeitig durchgeführt werden können.

7. Vorrichtung für die Mehrfach-Endbearbeitung metallischer Teile nach Anspruch 1, dadurch gekennzeichnet, daß die tragenden Scheiben (1m, 2m, 3m) der kreisförmigen Felgen (1, 2, 3), welche um die einzige Mittelachse rotieren, eine intermittierende Bewegung mit Vorwärtsschritten durchführen, die den Sektoren (6) der rotierenden Felgen entsprechen, wobei die schrittweisen Bewegungen in einem Zeitintervall zwischen fünf Sekunden und fünf Minuten liegen.

8. Vorrichtung für die Mehrfach-Endbearbeitung metallischer Teile nach Anspruch 1, dadurch gekennzeichnet, daß die Anzahl der axial offenen Sektoren (6) in jeder kreisförmigen Felge (1, 2, 3) der Vorrichtung zwischen 6 und 32 beträgt.

## Revendications

1. Machine pour effectuer des opérations multiples de finition de pièces métalliques constituée de :
- deux paires ou plus de disques métalliques verticaux parallèles (1a, 1b; 2a, 2b; 3a, 3b) fixés à un support commun (4);
- un troisième disque (1m, 2m, 3m) parallèle aux autres, logé dans l'espace délimité par chaque paire de disques (1a, 1b; 2a, 2b; 3a, 3b) et pouvant tourner librement;
- un rebord circulaire (1, 2, 3) fixé à ce troisième disque porteur et divisé au moyen de séparations en secteurs ouverts transversalement (6);
- un dispositif de transfert (2f, 3f) mobile verticalement, emboîté entre les deux paires de disques (1b, 2a; 2b, 3a) et séparant deux rebords circulaires contigus;
- un dispositif de chargement (1f) mobile verticalement et simultanément avec le dispositif de transfert (2f, 3f) et un dispositif fixe de déchargement (3g); tous ces dispositifs (2f, 3f), (1f) et (3g) étant inclinés de 30° à 60° par rapport à la verticale; chaque disque fixe étant équipé d'une ouverture placée à l'avant du rebord, adaptée à la forme et la taille de chaque secteur et située approximativement au niveau de l'axe des disques; et
- un moyen de traitement pour réaliser ces opérations de finition dans lesdits secteurs.

2. Machine pour effectuer des opérations multiples de finition de pièces métalliques selon le revendication 1, caractérisée en ce que lesdits dispositifs de transferts (2f, 3f) et de chargement (1f) mobiles verticalement et simultanément sont des parallélépipèdes de section trapézoïdale, inclinés de 30° à 60° par rapport à la verticale, leur petite base étant dirigée du côté inférieur, ces trapèzes ayant un volume correspondant à celui de l'un des secteurs (6) du rebord circulaire (1, 2, 3) ouverts transversalement.

3. Machine pour effectuer des opérations multiples de finition de pièces métalliques selon la revendication 1, caractérisée en ce que le secteur ouvert transverselement (6) au plus bas de chaque rebord circulaire (1, 2, 3) traverse une cuve (1c, 2c, 3c) contenant le liquide constituant le moyen de traitement effectivement utilisé pour ce traitement le long de chaque rebord circulaire (1, 2, 3).

4. Machine pour effectuer des opérations multiples de finition de pièces métalliques selon la revendication 1, caractérisée en ce que le dernier rebord circulaire tournant (3) de la machine est relié par un conduit (9) à un système de chauffage (10) permettant de sécher les pièces contenues dans les secteurs correspondants (6) ouverts transversalement.

5. Machine pour effectuer des opérations multiples de finition de pièces métalliques selon la revendication 2, caractérisée en ce que chaque disque métallique vertical de la paire (1a, 1b; 2a, 2b; 3a, 3b) est équipé d'une ouverture carrée ou rectangulaire dont le côté inférieur est constitué par la petite base dudit dispositif de section trapézoïdale (1f, 2f, 3f).

6. Machine pour effectuer des opérations multiples de finition de pièces métalliques selon la revendication 5, caractérisée en ce que l'ouverture du disque (1d, 2d, 3d) de chaque paire la plus proche de l'alimentation est en position plus basse que celle de l'ouverture du disque (1e, 2e, 3e) laquelle est la plus éloignée de l'alimentation, de façon à permettre les opérations de chargement et de déchargement de chaque rebord (1, 2, 3) au même moment en utilisant les dispositifs à section trapézoïdale (1f, 2f, 3f).

7. Machine pour effectuer des opérations multiples de finition de pièces métalliques selon la revendication 1, caractérisée en ce que les disques porteurs (1m, 2m, 3m) des rebords circulaires (1, 2, 3) tournant autour d'un axe central unique sont susceptibles d'effectuer des mouvements intermittents, un déplacement étant égal à une section (6) d'un rebord circulaire tournant et une cadence pas à pas correspondant à un intervalle de temps compris entre 5 secondes et 5 minutes.

8. Machine pour effectuer des opérations multiples de finition de pièces métalliques selon la revendication 1, caractérisée en ce que le nombre de secteurs ouverts transversalement (6) sur chaque rebord circulaire (1, 2, 3) de la machine est compris entre 6 et 12.
